# EUROPÄISCHE PATENTANMELDUNG

(11) **EP 3 170 767 A1**
(43) Veröffentlichungstag der Anmeldung: **24.05.2017**
(21) Anmeldenummer: 16202696.7
(22) Anmeldetag: 01.07.2013
(51) Int. Cl.: B65D 85/804

(54) **PORTIONSKAPSEL UMFASSEND KUNSTSTOFFFOLIE, IN DER EINE MASCHINELL ERFASSBARE KENNUNG VORGESEHEN IST**

(30) Priorität: 29.06.2012 DE 102012105791; 19.06.2013 DE 102013211568
(62) Teilanmeldung aus: 13733288.8
(71) Anmelder: K-fee System GmbH, 51469 Bergisch Gladbach (DE)
(72) Erfinder: KRÜGER, Marc, 51467 Bergisch Gladbach (DE); EMPL, Günter, 51429 Bergisch Gladbach (DE)
(74) Vertreter: Wolff, Felix

(57) **Zusammenfassung**

Die vorliegende Erfindung betrifft eine Portionskapsel zur Herstellung eines Getränks aufweisend einen Kapselkörper mit einem Kapselboden und einen Deckel, wobei zwischen dem Kapselboden und dem Deckel ein Hohlraum ausgebildet ist, in dem ein Getränkesubstrats vorgesehen ist, und die eine maschinelle erfassbare Kennung aufweist, die es ermöglicht die jeweilige Portionskapsel zu individualisieren. Des Weiteren betrifft die vorliegende Erfindung die Verwendung der Portionskapsel zur Herstellung eines Getränks.

## Beschreibung

Die vorliegende Erfindung betrifft eine Portionskapsel zur Herstellung eines Getränks mit einem Basiselement, das einen Hohlraum aufweist, in dem ein Getränkerohmaterial vorgesehen ist und der von einer Membran verschlossen wird, die an dem Basiselement befestigt ist, wobei sie eine Kennung aufweist, die es ermöglicht, die jeweilige Portionskapsel zu individualisieren. Des Weiteren betrifft die vorliegende Erfindung ein Verfahren zur Herstellung einer Portionskapsel und die Verwendung der Portionskapsel zur Herstellung eines Getränks.

Derartige Portionskapseln sind hinlänglich bekannt und werden in einer Vielzahl von Ausführungsformen am Markt angeboten und werden dazu eingesetzt Kaffee, Espresso, Cappuccino, Tee, Milch- oder Kakao-Getränke aber auch sonstige Getränke oder Lebensmittel wie Suppen herzustellen. Um in einem Automaten hergestellt werden zu können, müssen diese Kapseln alle dieselbe äußere Form haben, wobei sich das jeweilige Herstellungsverfahren unterscheidet. Beispielsweise kann sich die Wassermenge und/oder die Temperatur, die zur Herstellung des jeweiligen Getränks eingesetzt wird, unterscheiden. Des Weiteren kann das Wasser der Portionskapsel kontinuierlich oder intermittierend durch die Portionskapsel geleitet werden. Die Automaten, die zur Herstellung des jeweiligen Getränks oder Lebensmittels eingesetzt werden, müssen in regelmäßigen Abständen gereinigt werden, wozu Reinigungskapseln zur Verfügung stehen, deren äußere Maße zu den Maßen der Portionskapseln identisch sind und die ebenfalls von Wasser durchströmt wird, nachdem sie in den Automat eingeführt worden ist, das die Reinigungssubstanz aus den Kapseln löst und mit der Lösung die Brühkammer des Automaten und die stromabwärtigen Leitungen reinigt. Dabei ist es unbedingt zu vermeiden, dass ein Benutzer, beispielsweise ein Kind oder ein sehbehinderter Erwachsener die Reinigungskapsel zur Herstellung eines Getränkes einsetzt und dieses konsumiert.

Es war deshalb die Aufgabe der vorliegenden Erfindung eine Portionskapsel zur Verfügung zu stellen, die nur für einen ganz bestimmten Getränkeautomaten geeignet ist, kostengünstig zu fertigen ist und/oder bei welcher die im Zusammenhang mit dem Stand der Technik aufgezeigten Nachteile vermieden werden können.

Gelöst wird die Aufgabe mit einer Portionskapsel zur Herstellung eines Getränks aufweisend einen Kapselkörper mit einem Kapselboden und einen Deckel, wobei zwischen dem Kapselboden und dem Deckel ein Hohlraum ausgebildet ist, in dem ein Getränkesubstrats vorgesehen ist, und die eine maschinelle erfassbare Kennung aufweist, die es ermöglicht die jeweilige Portionskapsel zu individualisieren, wobei die Kennung in einer ein- oder mehrschichtigen Kunststofffolie vorgesehen ist, aus der die Portionskapsel zumindest teilweise gefertigt ist.

Die zu diesem Gegenstand der vorliegenden Erfindung gemachte Offenbarung gilt für den anderen Gegenstand der vorliegenden Erfindung gleichermaßen und umgekehrt.

Die vorliegende Erfindung betrifft eine Portionskapsel zur Herstellung eines Getränkes oder Lebensmittels, welches einen Hohlraum aufweist, in dem ein Getränkerohmaterial vorgesehen ist. Eine derartige Portionskapsel wird beispielsweise aus Kunststoff, einem Naturstoff und/oder einem biologisch abbaubaren Werkstoff hergestellt und weist ein Basiselement, insbesondere ein geformtes, vorzugsweise tiefgezogenes, oder ein durch Spitzen hergestelltes Basiselement, auf, das vorzugsweise kegelstumpfförmig oder zylindrisch geformt ist und einen Boden aufweist. In den Hohlraum der Portionskapsel wird das Getränkerohmaterial eingefüllt, das beispielsweise von einer Flüssigkeit, insbesondere Wasser, extrahiert und/oder aufgelöst wird. Vorzugsweise wird das Basiselement nach dem Einfüllen des Getränkerohmaterials, insbesondere mit einer Membran, verschlossen. Die Membran ist vorzugsweise dem Boden des Basiselementes gegenüberliegend vorgesehen. Die Membran kann aus demselben oder einem unterschiedlichen Werkstoff wie das Basiselement gefertigt sein und wird vorzugsweise durch Siegeln und/oder Kleben an dem Basiselement befestigt. Die Membran kann gas- und/oder flüssigkeitsdicht ausgebildet oder gas- und/oder flüssigkeitsdurchlässig ausgebildet sein. Des Weiteren können in dem Hohlraum ein oder mehrere Einbauelemente, wie beispielsweise ein Filter, ein Flüssigkeitsverteiler, ein Vlies, ein Filz, eine Absperrfolie und/oder dergleichen vorgesehen werden. Für den Fall, dass ein Filz und ein Vlies vorgesehen sind, sind diese vorzugsweise miteinander verbunden. Der Filz und/oder das Vlies können mehrlagig vorgesehen werden, wobei sich die Lagen in der Art des verwendeten Ausgangsmaterials und/oder dessen Verarbeitung unterscheiden können. Die Membran und/oder der Boden können mit mehreren Ausnehmungen (Löchern) versehen sein.

Erfindungsgemäß ist weiterhin vorgesehen, dass diese Portionskapsel eine Kennung aufweist, die es ermöglicht, die jeweilige Portionskapsel zu individualisieren.

Individualisieren im Sinne der Erfindung bedeutet vorzugsweise, dass die jeweilige Portionskapsel einer Gruppe zugeordnet werden kann, die für die Herstellung eines Getränks oder Lebensmittels oder zur Reinigung des Automaten geeignet ist. Es ist nicht nötig, dass die Kennung offenbart, um welche Portionskapsel es sich speziell handelt, d.h. eine Seriennummer oder Chargennummer oder dergleichen enthält, sondern lediglich die Klassierung der jeweilige Portionskapsel zu einer Gruppe von Portionskapseln erlaubt, beispielsweise Getränk-/Lebensmittelportions- oder Reinigungskapsel. Vorzugsweise erlaubt die Kennung zusätzlich die Differenzierung zwischen den einzelnen Getränke und/oder Lebensmittelart, beispielsweise, dass es sich um eine Kapsel handelt, mit der Tee, Kaffee, ein Milchgetränk oder dergleichen oder eine Suppe hergestellt werden kann.

Vorzugsweise erfasst ein an einem Automaten, beispielsweise Kaffeeautomaten, vorgesehener Sensor/Detektionsmittel diese Kennung und vergleicht sie vorzugsweise mit einer abgespeicherten Kennung. Vorzugsweise ist der Automat nur dann in Betrieb zu nehmen, insbesondere seine, das Wasser zur Verfügung stellende Druckpumpe, wenn die ermittelte Kennung mit der Referenzkennung einer Getränk-/Lebensmittelportionskapsel übereinstimmt. Andernfalls ist der Kaffeeautomat nicht in Betrieb zu nehmen, weil zu befürchten ist, dass es sich um eine Reinigungskapsel handelt, in der sich beispielsweise ein Reinigungsmittel befindet. In diesem Fall kann der Automat beispielsweise nur dann in Betrieb genommen werden, wenn vorher eine bestimmte Tastenkombination auf dem Bedienfeld des Automaten gedrückt worden ist, mit der der Benutzer verifiziert, dass ihm bekannt ist, dass es sich um eine Reinigungskapsel handelt. Dadurch wird sicher vermieden, dass eine Reinigungskapsel versehentlich zur Getränkeherstellung verwendet wird.

Die Kennung kann alternativ oder zusätzlich dazu dienen, dass der Kaffeeautomat ein bestimmtes Programm fährt, d. h. beispielsweise das Wasser auf eine bestimmte Temperatur heizt, mit einem bestimmten Druck zur Verfügung stellt und/oder eine bestimmte Wassermenge durch die Portionskapsel fördert.

Alternativ oder zusätzlich dient die Kennung zum Sortieren der Materialien aus dem die Portionskapsel hergestellt ist bei einem späteren Entsorgungs- und/oder Recycling-Prozess.

Erfindungsgemäß ist die maschinell erfassbare Kennung in der Kunststofffolie vorgesehen, aus welcher die Portionskapsel zumindest teilweise, vorzugsweise vollständig, gefertigt ist. In der Kunststofffolie vorgesehen bedeutet, dass die Kennung bei der Herstellung der Kunststofffolie in diese integriert wird und bei der Verformung der Kunststofffolie zur Fertigung des entsprechenden Teils der Portionskapsel, vorzugsweise Deckel oder Kapselkörper oder, für den Fall, dass der Kapselkörper und/oder der Deckel durch Sptitzen/Spritzgießen hergestellt wird in der Kunststoffmasse bereits vorhanden ist. Dies hat den Vorteil, dass für die Integration der Kennung kein weiterer Herstellungsschritt erforderlich ist.

Die Herstellung der Kunststofffolie kann nach beliebigen Herstellungsverfahren, wie z. B. durch ein Spritzgießverfahren oder Extrusionsverfahren erfolgen. Die Herstellung der erfindungsgemäßen Kunststofffolien kann auch zumindest teilweise durch Laminierung erfolgen.

In einer bevorzugten Ausführungsform wird die Kunststofffolie durch ein Spritzgießverfahren hergestellt.

In einer anderen bevorzugten Ausführungsform wird die Kunststofffolie durch ein Extrusionsverfahren hergestellt. Als Extrusionsverfahren zur Herstellung der Kunststofffolie eignen sich Castfolien-Extrusionsverfahren und Blasfolien-Extrusionsverfahren, wobei die Extrusion auch durch Coextrusion erfolgen kann und das Castfolien-Extrusionsverfahren vorzugsweise mit Hilfe von Flachdüsen erfolgt. Ist die Kunststofffolie mehrschichtig, so kann sie in Form von Einzelschichten, als Teilverbund oder als gesamte Mehrschichtfolie, ggf. auch in Form einer Schlauchfolie, produziert und verarbeitet werden. Einzelschichten und/oder ein oder mehr Teilverbunde können vorzugsweise durch Laminierung zusammengefügt werden. In einer bevorzugten Ausführungsform wird zumindest ein Teil der Kunststofffolie in Form einer Castfolie (als Flachfilm-Extrudat) hergestellt. In einer weiteren bevorzugten Ausführungsform wird die gesamte Kunststofffolie in Form einer coextrudierten Castfolie hergestellt. In einer weiteren Ausführungsform wird die Kunststofffolie als Mehrschicht-Blasfolie durch Extrusion, vorzugsweise durch Blasfolien-Coextrusion, hergestellt.

Die Integration der maschinell erfassbaren Kennung in die Kunststofffolie erfolgt erfindungsgemäß während der Herstellung der Kunststofffolie, vorzugsweise während des Extrusionsverfahrens oder Spritzgießverfahrens. In einer bevorzugten Ausführungsform wird die Kennung in die zu extrudierende Kunststoffmasse wenigstens einer Schicht eingeführt. In einer anderen bevorzugten Ausführungsform wird die Kennung in die Kunststoffmasse für das Spritzgießverfahren eingeführt.

Gemäß einer bevorzugten Ausführungsform ist der Kapselkörper zumindest teilweise, vorzugsweise vollständig, aus der Kunststofffolie gefertigt. Vorzugsweise wird der Kapselkörper durch ein Formgebungsverfahren, besonders bevorzugt durch Tiefziehen aus der Kunststofffolie gefertigt. Erfindungsgemäß ist die maschinell erfassbare Kennung bereits während des Formgebungsverfahrens vorhanden. In einer bevorzugten Ausführungsform wird die Kennung in die Kunststoffmasse, vorzugsweise in das Kunststoff-Granulat, eingeführt, aus welcher die noch nicht geformte Kunststofffolie, vorzugsweise durch (Co)-extrusion oder Spritzgießen, gefertigt wird.

Gemäß einer weiteren bevorzugten Ausführungsform ist der Deckel zumindest teilweise, vorzugsweise vollständig, aus der Kunststofffolie gefertigt. Vorzugsweise wird der Kapselkörper durch ein Formgebungsverfahren, beispielsweise durch Ausstanzen und/oder Zuschneiden, aus der Kunststofffolie gefertigt. Erfindungsgemäß ist die maschinell erfassbare Kennung bereits während des Formgebungsverfahrens vorhanden. In einer bevorzugten Ausführungsform wird die Kennung in die Kunststoffmasse, vorzugsweise in das Kunststoff-Granulat, eingeführt, aus welcher die noch nicht geformte Kunststofffolie, vorzugsweise durch (Co-)extrusion oder Spritzgießen, gefertigt wird.

Gemäß einer weiteren bevorzugten Ausführungsform ist die Kennung zumindest in mehreren, in regelmäßigen Abständen angeordneten Abschnitten der Kunststofffolie vorgesehen. Besonders bevorzugt erstreckt sich die Kennung über die gesamte Fläche der Kunststofffolie. Dies hat den Vorteil, dass der die Kennung aufweisende Teil der Portionskapsel, vorzugsweise der Kapselkörper und/oder Deckel, aus einem beliebigen Abschnitt der Kunststofffolie gefertigt werden kann.

Die Kunststofffolie kann ein- oder mehrschichtig sein. Ist die Kunststofffolie mehrschichtig, so kann die Kennung in ein oder mehreren Schichten der Kunststofffolie vorgesehen sein.

In einer bevorzugten Ausführungsform der vorliegenden Erfindung weist die Kunststofffolie wenigstens eine Schicht a) mit einem vorgegebenen Wert für den elektrischen Widerstand, vorzugsweise den Oberflächenwiderstand und/oder Durchgangswiderstand, als Kennung auf. Die Schicht a) liegt vorzugsweise als eine Oberflächenschicht der Kunststofffolie vor. Besonders bevorzugt bildet die Schicht a) die dem Hohlraum abgewandte Seite der Kunststofffolie.

Die Schicht a) kann aus ein oder mehreren Kunststoffen, vorzugsweise thermoplastischen Polymeren, gefertigt sein, und kann ggf. ein elektrisch leitfähiges Additiv und/oder magnetisches Additiv enthalten.

In einer bevorzugten Ausführungsform basiert die Schicht a) auf wenigstens zwei Kunststoffen, vorzugsweise thermoplastischen Polymeren mit einem unterschiedlichen Wert des elektrischen Widerstands, vorzugsweise Oberflächenwiderstand und/oder Durchgangswiderstand, in einem vorgegebenen Mischungsverhältnis.

Vorzugsweise basiert die Schicht auf wenigstens einem, besonders bevorzugt wenigstens zwei thermoplastischen Polymeren ausgewählt aus der Gruppe umfassend Polyolefine, Polyamide, Polyamidimide, Polyester und Copolymere aus wenigstens zwei Monomeren der genannten Polymere. Ganz besonders bevorzugt sind Mischungen aus wenigstens einem Polyamid und wenigstens einem Polyester.

Als thermoplastische Polyamide zur Herstellung der Schicht a) eignen sich thermoplastische aliphatische, teilaromatische oder aromatische Homo-oder Copolyamide. Solche Polyamide sind Polyamide aus Diaminen wie aliphatischen Diaminen mit 2-10 Kohlenstoffatomen, insbesondere Hexamethylendiamin und Tetramethylendiamin, oder aromatischen Diaminen mit 6-10 Kohlenstoffatomen, insbesondere p-Phenylendiamin und Dicarbonsäuren wie aliphatischen oder aromatischen Dicarbonsäuren mit 6-14 Kohlenstoffatomen wie z.B. Adipinsäure, Terephthalsäure oder Isoterephthalsäure. Weiterhin können die Polyamide aus Lactamen mit 4-10 Kohlenstoffatomen wie z.B. ε-Caprolactam hergestellt worden sein. Besonders geeignete Polyamide zur Herstellung der Schicht (a) sind beispielsweise PA 46, PA 6, PA 66, PA 11, PA12 und/oder Mischungen aus wenigstens zwei dieser Polyamide.

Als Polyester zur Herstellung der Schicht a) können thermoplastische, aliphatische, teilaromatische oder aromatische Homo-oder Copolyester eingesetzt werden. Solche Polyester leiten sich von Polyolen wie z.B. Ethylenglycol oder 1,4-Butandiol und Dicarbonsäuren oder Dicarbonsäure-Derivaten wie Adipinsäure, und/oder Terephthalsäure ab. Bevorzugt eignen sich Polybutylenadipat (PBA), Polyethylenterephthalat (PET), Polybutylenterephthalat (PBT) oder die entsprechenden Co-Polymere.

Soweit zur Herstellung der Schicht a) ein thermoplastisches Polyolefin zum Einsatz kommt, können thermoplastische Olefin-Homo-oder Copolymere von α,β-ungesättigten Olefinen mit 2-10 Kohlenstoffatomen wie z.B. Polyethylene (PE, insbesondere LDPE oder HDPE), Polypropylene (PP), Polybutylene (PB), Polyisobutylene (PI) oder Mischungen aus wenigstens zwei der genannten Polymere eingesetzt werden. Mit "LDPE" wird Polyethylen niedriger Dichte bezeichnet, welches eine Dichte im Bereich von 0,86-0,93 g/cm³ aufweist und sich durch einen hohen Verzweigungsgrad der Moleküle auszeichnet. Mit "HDPE" wird Polyethylen hoher Dichte bezeichnet, welches nur eine geringe Verzweigung der Molekülkette aufweist, wobei die Dichte im Bereich zwischen 0,94 und 0,97 g/cm³ liegen kann. Bevorzugte Polyolefine zur Herstellung der Schicht a) sind Ethylen-Homo- oder Copolymere und Propylen-Homo- oder Copolymere.

Vorzugsweise ist die Kunststofffolie und/oder die mit der Kennung ausgestatteten Schicht a) nicht elektrisch leitfähig. Dies bedeutet, dass die Leitfähigkeit der Kunststofffolie bzw. der Schicht a) zu gering ist, um einen Stromkreis zu schließen, beispielsweise um den Stromkreis einer an der Getränkemaschine angebrachten Steuereinheit zu schließen.

Vorzugsweise beträgt der spezifische Oberflächenwiderstand der Kunststofffolie und/oder der mit der Kennung ausgestatteten Schicht a) mindestens 10⁹ Ω/sq, besonders bevorzugt mindestens 10¹⁰Ω/sq, ganz besonders bevorzugt mindestens 10¹¹ Ω/sq, und insbesondere 10¹¹ Ω bis 10¹⁴ Ω/sq, vorzugsweise gemessen nach DIN 53482.

Vorzugsweise beträgt der spezifische Durchgangswiderstand (Volumenwiderstand) der Kunststofffolie und/oder der mit der Kennung ausgestatteten Schicht a) mindestens 10⁹ Ω cm, besonders bevorzugt mindestens 10¹⁰Ω cm, ganz besonders bevorzugt mindestens 10¹¹ Ω cm, und insbesondere 10¹¹ Ω bis 10¹⁸ Ω, vorzugsweise gemessen nach DIN 53482.

Der Wert des elektrischen Widerstands, vorzugsweise Oberflächenwiderstand oder Durchgangswiderstand, wird vorzugsweise durch die ein oder mehr Polymer-Komponenten, bei mehreren Polymer-Komponenten durch deren Mischungsverhältnis und/oder durch die Schichtdicke der Schicht a) bestimmt.

Die Nutzung des elektrischen Widerstands einer derartigen, rein auf Kunststoffen basierenden Schicht als Kennung hat den Vorteil, dass die Kennung allein auf den Materialeigenschaften der Kunststofffolie beruht und somit ein Zusatz von speziellen Hilfsstoffen nicht erforderlich ist. Dies hat ferner den Vorteil, dass die Recyclefähigkeit der Portionskapsel nicht beeinträchtigt wird und die Kennung auch bei einer Beschädigung bzw. Verformung der Portionskapsel erhalten bleibt und weiter lesbar ist. Die Kennung kann somit zusätzlich oder alternativ bei einem späteren Entsorgungs- und/oder Recycling-Prozess zum Sortieren der Materialien aus dem die Portionskapsel hergestellt ist dienen. Durch die Verwendung eines Polyamids als Polymer-Komponente der Schicht a) kann ferner die Steifigkeit der Kunststofffolie erhöht werden.

Bei der Kennung kann es sich beispielsweise um ein optisch erkennbares Material, beispielsweise eine fluoreszierende und/oder phosphoreszierende Substanz, handeln, die in die Folie oder eine ihrer Schichten integriert ist.

Eine fluoreszierende Substanz im Sinne der Erfindung besteht aus mindestens einem Molekül, mit mindestens einem Elektronen, das angeregt durch elektromagnetische Strahlung vorzugsweise aus seinem Orbital herausgelöst und in ein vorzugsweise leeres, unbesetztes Orbital mit einem höheren Energiegehalt gehoben wird. Dieser angeregte Zustand ist in der Regel nicht stabil, so dass das Elektron wieder in sein ursprüngliches Orbital zurückfällt und seine Energie wird zumindest teilweise in Form von elektromagnetischer Strahlung frei. Diese freiwerdende elektromagnetische Strahlung ist vorzugsweise langwelliger als die anregende elektromagnetische Strahlung. Bei einer Kennung, die auf einer fluoreszierenden Substanz basiert, empfängt ein Sensor die freiwerdende Strahlung und eine angeschlossene Steuerung vergleicht das Profil und/oder die Intensität dieser Strahlung mit einem hinterlegten Profil. Sind diese zumindest teilweise identisch weiß die angeschlossene Steuerung, dass es sich um eine Portions- und nicht um eine Reinigungskapsel handelt und gibt den Automaten frei. Alternativ oder zusätzlich erkennt die Steuerung um was für eine Portionskapsel es sich handelt, beispielsweise Tee, Kaffee, Milch oder dergleichen und steuert den Automaten entsprechend. Vorzugsweise weist die freiwerdende Strahlung mindestens ein, besonders bevorzugt mehrere Maxima auf. Der Sensor bzw. die angeschlossene Steuerung untersuchen dann, ob mindestens eines dieser Maxima bei der empfangenen Strahlung vorhanden ist.

Eine phosphoreszierende Substanz im Sinne der Erfindung besteht aus mindestens einem Molekül, mit mindestens einem Elektronen, das angeregt durch elektromagnetische Strahlung vorzugsweise aus seinem Orbital herausgelöst und in ein vorzugsweise leeres, unbesetztes Orbital mit einem höheren Energiegehalt gehoben wird. Dieser angeregte Zustand ist in der Regel nicht stabil, so dass das Elektron wieder in sein ursprüngliches Orbital zurückfällt und seine Energie wird zumindest teilweise in Form von elektromagnetischer Strahlung frei. Diese freiwerdende elektromagnetische Strahlung ist vorzugsweise langwelliger als die anregende Strahlung. Bei einer phosphoreszierenden Substanz endet die Strahlungsemission jedoch nicht mit dem Ende der Bestrahlung sondern klingt über einen längeren Zeitraum ab als dies bei der Fluoreszenz der Fall ist. Bei einer Kennung, die auf einer phosphoreszierenden Substanz basiert, empfängt ein Sensor, der in oder an dem Automaten vorgesehen ist die freiwerdende Strahlung und eine angeschlossene Steuerung vergleicht dieses Abklingprofil mit einem hinterlegten Abklingprofil oder Profilabschnitt. Vorzugsweise wird die Intensität dieser Strahlung, insbesondere bei einer bestimmten Frequenz, mit einem hinterlegten Abklingprofil und/oder einem bestimmten Wert verglichen. Sind diese zumindest teilweise identisch weiß der angeschlossene Steuerung, dass es sich um eine Portions- und nicht um eine Reinigungskapsel handelt und gibt den Automaten frei. Alternativ oder zusätzlich erkennt die Steuerung um was für eine Portionskapsel es sich handelt, beispielsweise Tee, Kaffee, Milch oder dergleichen und steuert den Automaten entsprechend. Der Sensor bzw. die angeschlossene Steuerung untersucht nach welcher Zeitspanne die ursprüngliche Intensität der Strahlung um einen bestimmten Prozentsatz abgeklungen ist und vergleicht den gemessen Wert mit einem hinterlegten Wert. Alternativ oder zusätzlich wird untersucht wie hoch die Intensität der Strahlung, insbesondere bei einer bestimmten Frequenz, nach einer bestimmten Zeitspanne ist und dieser Wert wird mit einem hinterlegten Wert verglichen. Stimmt der hinterlegte mit dem gemessenen Wert überein, gibt die Steuerung den Automaten frei oder wählt ein bestimmtes Zubereitungsprogramm für das jeweilige Getränk oder Lebensmittel. Stimmt der Wert nicht überein, kann der Automat nur unter bestimmten Voraussetzungen in Betrieb genommen werden, da zu es dann um eine Reinigungskapsel handeln könnte.

Die fluoreszierende und/oder phosphoreszierende Substanz wird mit einer bestimmten elektromagnetischen Strahlung angestrahlt und während und/oder nachdem die Strahlung ausgeschaltet worden ist, wird die Fluoreszenz und/oder Phosphoreszenz gemessen. Die Strahlung kann mit einer Wellenlänge oder mehreren Wellenlängen erfolgen. Die Strahlung kann eine oder mehrere Quellen, die gleichzeitig oder nacheinander zum Einsatz kommen, umfassen.

Es können ein oder mehrere Sensoren die von der fluoreszierende und/oder phosphoreszierende Substanz emittierte Strahlung analysieren. Der Sensor ist vorzugsweise in dem Automaten, beispielsweise dessen Brühkammer oder im Bereich des Einwurfschachtes vorgesehen.

Die Schicht a) kann alternativ oder zusätzlich wenigstens ein internes Antistatikum aufweisen. Derartige Antistatika, die zur Verbesserung der elektrischen Leitfähigkeit als Additive in Kunststoffmassen integriert werden können, sind aus dem Stand der Technik allgemein bekannt. Als Antistatika eignen sich beispielsweise quaternäre Ammoniumverbindungen, Alkylsulfonate, Alkylsulfate, Alkylarylsulfonate, Dithiocarbamate, Polyglykole, ethoxylierte Fettamine, ethoxylierte Fettamide, ethoxylierte Fettalkohole, ethoxylierte Alkylphenole, Polyethylenglykolfettsäureester, Glycerin- und Sorbitanpartialester sowie Kohlenstoff-basierte Antistatika, wie z.B. Kohlenstoffnanoröhren oder Ruße. Soweit ein Antistatikum in der Schicht a) enthalten ist, beträgt der Gewichtsanteil an Antistatikum vorzugsweise 0,01 bis 20 Gew.-%, besonders bevorzugt 0,1 bis 10 Gew.-%, bezogen auf das Gesamtgewicht der Schicht a). Bei dieser Ausführungsform wird der Wert des Oberflächenwiderstands vorzugsweise durch das Antistatikum, die ein oder mehr Polymer-Komponenten und/oder durch die Schichtdicke der Schicht a) bestimmt. Das Antistatikum liegt vorzugsweise über die gesamte Fläche der Schicht a) verteilt in der Kunststoffolie vor. Das Antistatikum wird vorzugsweise dem Granulat der Kunststoff-Komponenten vor der Herstellung der jeweiligen Schicht, vorzugsweise durch Extrusion, beigemischt.

Der elektrische Widerstand, vorzugsweise Oberflächenwiderstand und/oder Durchgangswiderstand, der Schicht a) wird vorzugsweise mit Hilfe eines am Getränkeautomaten angebrachten Sensors, beispielsweise eines Ohmmeters, über zwei Kontaktpunkte gemessen. Die Kontaktpunkte können sich an Deckel und/oder Kapselkörper befinden. Vorzugsweise erfolgt die Messung über zwei Kontaktpunkte am Kapselkörper. Entspricht der gemessene Wert nicht dem Referenzwert, so wird eine Inbetriebnahme des Getränkeautomaten vorzugsweise blockiert. Vorzugsweise wird zusätzlich ein optischer und/oder akustischer Warnhinweis abgesetzt. Dadurch kann beispielsweise verhindert werden, dass eine Portionskapsel, die aus einem nicht geeigneten Kunststoffmaterial gerfertigt ist, in dem jeweiligen Getränkeautomat eingesetzt und dort mit einer zu hohen Temperatur oder einem zu hohen Druck beaufschlagt wird.

Der Durchgangswiderstand der Kunststofffolie und/oder der mit der Kennung ausgestatteten Schicht a) kann alternativ oder zusätzlich durch die Schichtdicke der Kunststoffolie bzw. der Schicht a) beeinflusst werden.

In einer weiteren bevorzugten Ausführungsform der vorliegenden Erfindung ist die Kennung mit einem magnetischen Sensor erfassbar. In dieser Ausführungsform liegt vorzugsweise ein magnetisches, vorzugsweise ferromagnetisches oder ferrimagnetisches Additiv in wenigstens einer Schicht der Kunststofffolie vor. Geeignete magnetische Additive sind beispielsweise Eisen, Cobalt und ihre Legierungen, einschließlich AINiCo, SmCo, CoFe, AINiCoCu, CuNiCo, CoFe, CoFeV, FeMo, FeMoCo, CuNiFe, FePt, CoPt, CeCo und NdFeB, Chromdioxid, Eisenoxide, wie z.B. Magnetit und Hämatit, und magnetische Ferrite, insbesondere Calcium-, Strontium- und Bariumhexaferrit, und ihre Mischungen.

Das magnetische Additiv kann in einer oder mehreren Schichten der Kunststofffolie vorliegen. Vorzugsweise ist das magnetische Additiv in dem Material der jeweiligen Schicht(en) dispergiert. In einer bevorzugten Ausführungsform liegt das optisch erkennbare Additiv in wenigstens einer inneren Schicht vor. In einer anderen bevorzugten Ausführungsform liegt das magnetische Additiv in wenigstens einer Oberflächenschicht der Kunststofffolie, vorzugsweise in der dem Hohlraum der Portionskapsel abgewandten Seite der Kunststofffolie, vor. Das magnetische Additiv liegt vorzugsweise über die gesamte Fläche der Kunststofffolie verteilt vor. Vorzugsweise wird das magnetische Additiv dem Granulat der Kunststoff-Komponenten vor der Herstellung der jeweiligen Schicht(en), vorzugsweise durch Extrusion, beigemischt.

Ein am Getränkeautomaten angebrachter Sensor erfasst vorzugsweise die magnetische Flussdichte. Entspricht der gemessene Wert nicht dem Referenzwert, so wird eine Inbetriebnahme des Getränkeautomaten vorzugsweise blockiert. Vorzugsweise wird zusätzlich ein optischer und/oder akustischer Warnhinweis abgesetzt. Dadurch kann beispielsweise verhindert werden, dass eine Portionskapsel, die aus einem nicht geeigneten Kunststoffmaterial gefertigt ist, in dem jeweiligen Getränkeautomat eingesetzt und dort mit einer zu hohen Temperatur oder einem zu hohen Druck beaufschlagt wird.

In einer weiteren bevorzugten Ausführungsform der vorliegenden Erfindung ist die Kennung optisch erfassbar. Vorzugsweise weist die Kunststofffolie wenigstens ein optisch erkennbares Additiv als Kennung auf. Das optisch erkennbare Additiv kann in einer oder mehreren Schichten der Kunststofffolie vorliegen. In einer bevorzugten Ausführungsform liegt das optisch erkennbare Additiv in wenigstens einer inneren Schicht vor. In einer anderen bevorzugten Ausführungsform liegt das optisch erkennbare Additiv in wenigstens einer Oberflächenschicht der Kunststofffolie, vorzugsweise in der dem Hohlraum der Portionskapsel abgewandten Seite der Kunststofffolie, vor.

Das optisch erkennbare Additiv liegt vorzugsweise über die gesamte Fläche der Kunststofffolie verteilt vor. Vorzugsweise wird das optisch erkennbare Additiv dem Granulat der Kunststoff-Komponenten vor der Herstellung der jeweiligen Schicht(en), vorzugsweise durch Extrusion, beigemischt.

In einer bevorzugten Ausführungsform ist das optisch erkennbare Additiv in der Kunststofffolie in einer Menge von 0,001 bis 15 Gew.-%, besonders bevorzugt von 0,01 bis 10 Gew.-%, bezogen auf das Gesamtgewicht der Kunststofffolie, enthalten. In einer anderen bevorzugten Ausführungsform ist die optisch erkennbares Additiv in wenigstens einer Schicht, vorzugsweise in einer Oberflächenschicht der Kunststoffolie in einer Menge von 0,001 bis 15 Gew.-%, besonders bevorzugt von 0,01 bis 10 Gew.-%, bezogen auf das Gesamtgewicht der jeweiligen Schicht enthalten.

In einer bevorzugten Ausführungsform liegt eine lumineszenzfähige und/oder phosphoreszenzfähige Verbindung als optisch erkennbares Additiv vor.

Unter dem Begriff "lumineszenzfähig" wird im Sinne der vorliegenden Erfindung eine Verbindung verstanden, die nach Anregung durch Energiezufuhr - wie z.B. durch Absorption von UV-Strahlung - elektromagnetische Strahlung emittieren kann, die beim Übergang von einem elektronisch angeregten Zustand in einen Zustand niedrigerer Energie wie z.B. in den Grundzustand entsteht, wobei die emittierte elektromagnetische Strahlung im Regelfall energieärmer, d.h. langwelliger als die vorher absorbierte ist. Die emittierte elektromagnetische Strahlung kann dabei eine Wellenlänge aufweisen, die im Wellenlängenbereich der UV-Strahlung, vorzugsweise in einem Wellenlängenbereich von 200 bis 380 nm, im Wellenlängenbereich des sichtbaren Lichts, vorzugsweise in einem Wellenlängenbereich von 380 bis 780 nm, besonders bevorzugt in einem Wellenlängenbereich von 400 bis 500 nm, und/oder im Wellenlängenbereich der Infrarot-Strahlung, vorzugsweise in einem Wellenlängenbereich von >780 nm, besonders bevorzugt von 780 nm bis 1 mm, liegen kann. Es können zwei Erscheinungsformen der Lumineszenz unterschieden werden, nämlich die Fluoreszenz und die Phosphoreszenz. Dem Fachmann sind diese Begriffe bekannt. Besonders bevorzugt sind fluoreszenzfähige Verbindungen.

Geeignete lumineszenzfähige und/oder phosphoreszenzfähige Verbindungen vorzugsweise anorganische oder organische Verbindungen, besonders bevorzugt ausgewählt aus der Gruppe umfassend anorganische Farbstoffe, anorganische Pigmente, organische Farbstoffe und organische Pigmente, ganz besonders bevorzugt ausgewählt aus der Gruppe umfassend organische Farbstoffe und organische Pigmente, die jeweils lumineszieren, vorzugsweise fluoreszieren oder phosphoreszieren, besonders bevorzugt fluoreszieren können.

Vorzugsweise eignet sich als erfindungsgemäß eingesetzte lumineszenzfähige und/oder phosphoreszenzfähige Verbindung wenigstens eine Verbindung, die bei Anregung mit UV-Strahlung, vorzugsweise bei Anregung mit UV-Strahlung in einem Wellenlängenbereich von 200 bis 400 nm, luminesziert. Vorzugsweise eignet sich als erfindungsgemäß eingesetzte lumineszenzfähige und/oder phosphoreszenzfähige Verbindung wenigstens eine Verbindung, die bei Anregung mit UV-Strahlung Licht im Wellenlängenbereich der sichtbaren oder/und infraroten elektromagnetischen Strahlung emittiert, besonders bevorzugt Licht im Wellenlängenbereich der sichtbaren elektromagnetischen Strahlung, besonders bevorzugt in einem Wellenlängenbereich von 400 bis 500 nm, emittiert.

Die lumineszenzfähige und/oder phosphoreszenzfähige Verbindung kann beispielsweise durch die Bestimmung der Wellenlänge ihrer nach Anregung durch Energiezufuhr emittierten Strahlung und/oder anhand des Energieeintrags und/oder der Temperatur bei der dieses Ereignis eintritt, maschinell erkannt werden. Als Detektionsmittel eignet sich vorzugsweise jeder übliche Lumineszenztaster. Derartige Detektionsmittel umfassen vorzugsweise einen Sender zur Aussendung von Strahlung, vorzugsweise im UV-Bereich, durch welche die lumineszenzfähige und/oder phosphoreszenzfähige Verbindung angeregt wird, und ferner eine Vorrichtung für den Empfang und die Auswertung der von der lumineszenzfähige und/oder phosphoreszenzfähigen Verbindung emittierten Strahlung auf.

In einer weiteren bevorzugten Ausführungsform liegt als optisch erkennbares Additiv ein Additiv vor, welches seine optischen Eigenschaften nach Energiezufuhr, beispielsweise durch Absorption von UV-Strahlung oder durch eine Temperaturerhöhung, irreversibel ändert. Vorzugsweise ist dieses Additiv ein Laserlicht-absorbierendes Additiv, welches vorzugsweise über die gesamte Fläche der Kunststofffolie verteilt, besonders bevorzugt dispergiert ist. Durch Einwirkung von Laserlicht auf dieses Additiv kann die Kunststofffolie mit einer optisch erfassbaren Kennung, vorzugsweise einem Barcode, Logo oder Rapport, ausgestattet werden; d.h. die Kunststofffolie kann durch Einwirkung eines Lasers beschrieben werden.

Geeignete Laserlicht-absorbierende Additive sind beispielsweise aus EP 1 567 594 und EP 1 567 595 bekannt. Sie enthalten vorzugsweise wenigstens Metallsalz als Laserlicht-Absorptionsmittel und/oder Laserlicht-Reflektor, wenigstens ein karbonisierendes Polymer und wenigstens ein modifizierten Polyolefin-Homo- oder Copolymeres. Geeignete Metallsalze sind beispielsweise Oxide, Hydroxide, Sulfide, Sulfate und Phosphate von Kupfer, Bismuth, Zinn, Silber, Titan, Antimon, Mangan, Eisen, Nickel und Chrom, sowie Laserlicht-absorbierende anorganische und organische Farbstoffe, insbesondere AzoFarbstoffe. Als modifizierte Polyolefin-Homo- oder Copolymere eignen sich insbesondere modifizierte Propylen-Homo- oder Copolymere, welches mit wenigstens einer organischen Säure oder wenigstens einem organischen Säureanhydrid, vorzugsweise mit Maleinsäureanhydrid modifiziert sind. Als karbonisierendes Polymer können beispielsweise die bereits genannten Polyamide und/oder Polyester und/oder ein Polycarbonat eingesetzt werden.

In einer bevorzugten Ausführungsform liegt in der Kunststofffolie eine durch ein derartiges Laserlicht-absorbierendes Additiv bewirkte optisch erfassbare Kennung, vorzugsweise in Form eines Barcodes, Logos oder Rapports vor. Vorzugsweise wird die Kunststofffolie bei ihrer Herstellung mit dem Laserlicht-absorbierenden Additiv ausgestattet. Die Einwirkung des Laserlichts kann entweder vor der Fertigung der Portionskapsel oder anschließend erfolgen.

In einer weiteren bevorzugten Ausführungsform der vorliegenden Erfindung ist die Kennung eine maschinell erkennbare Oberflächenstruktur. Besonders bevorzugt sind Kennungsstreifen. Wird die Kunststofffolie durch (Co)-extrusion hergestellt, so wird die maschinell erkennbare Oberflächenstruktur vorzugsweise bei der Extrusion der Kunststofffolie mit Hilfe einer formgebenden Kalandrierwalze in die Kunststofffolie eingebracht. In diesem Fall sind Kennungsstreifen besonders bevorzugt. Wird die Kunststofffolie alternativ durch ein Spritzgießverfahren hergestellt, so wird sie vorzugsweise mit Hilfe eines entsprechend geformten Hohlraums des Spritzgießwerkzeugs oder Stempels mit der maschinell erkennbaren Oberflächenstruktur ausgestattet. Die maschinell erkennbare Oberflächenstruktur kann eine beliebige Form haben. Geeignet sind Muster, Narbungen, Gravuren und insbesondere Kennungsstreifen.

Mit der erfindungsgemäßen Portionskapsel ist es möglich, zu verhindern, dass Portionskapseln, die nicht für einen bestimmten Getränkeautomaten vorgesehen sind, in diesen eingeführt werden. Ferner ist es anhand der Kennung möglich, dass der Getränkeautomat erkennt, welche Art von Kapsel sich in seiner Brühkammer befindet und den Getränke- oder Lebensmittelherstellungsprozess, d.h. beispielsweise die Menge an Wasser, den erforderlichen Extraktionsdruck und/oder die gewünschte Temperatur entsprechend einstellt.

Ein weiterer Gegenstand der vorliegenden Erfindung ist die Verwendung einer erfindungsgemäßen Portionskapsel zur Herstellung eines Getränks, vorzugsweise zur Herstellung eines Kaffee-, Kakao-, Tee- und/oder Milchgetränks oder eines Lebensmittels, insbesondere einer Suppe.

Die zu einem Gegenstand der vorliegenden Erfindung gemachten Ausführungen gelten für die anderen Gegenstände gleichermaßen und umgekehrt.

Ausführungsbeispiele der Erfindung sind in den Figuren dargestellt und in der nachfolgenden Beschreibung näher erläutert. Die Figuren sind lediglich beispielhaft beschrieben und schränken den allgemeinen Erfindungsgedanken nicht ein. Die Beschreibung gilt für alle Gegenstände der vorliegenden Erfindung gleichermaßen.
**Figur 1** zeigt eine Portionskapsel, deren Kapselkörper aus einer Kunststofffolie mit einem vorgegebenen Wert für den Oberflächenwiderstand gefertigt ist.
**Figur 2** zeigt eine Portionskapsel, deren Deckel aus einer Kunststofffolie mit einem vorgegebenen Wert für den Oberflächenwiderstand gefertigt ist.
**Figur 3** zeigt eine Portionskapsel, deren Kapselkörper aus einer Kunststofffolie gefertigt ist, wobei in der Oberflächenschicht a) der Kunststofffolie eine lumineszenzfähige und/oder phosphoreszenzfähige Verbindung dispergiert ist.
**Figur 4** zeigt eine Portionskapsel, deren Kapselkörper aus einer Kunststofffolie gefertigt ist, wobei in der Oberflächenschicht der Kunststofffolie ein Laserlicht-absorbierendes Additiv dispergiert ist und welche einen durch die Einwirkung von Laserlicht erzeugten Barcode aufweist
**Figur 5** zeigt eine Portionskapsel, deren Deckel aus einer Kunststofffolie mit taktisch erfassbaren Kennungsstreifen gefertigt ist.

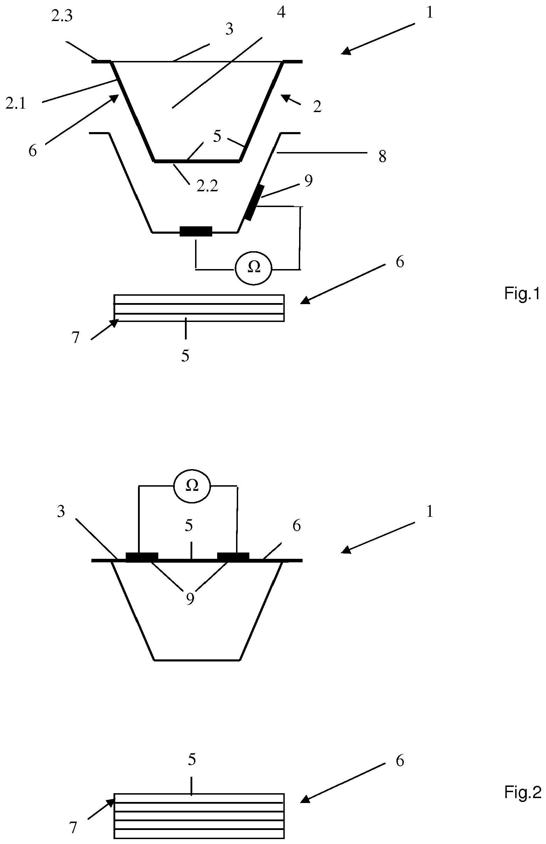

**Figur 1** zeigt eine Portionskapsel 1, die einen Kapselkörper 2 mit einer Wandung 2.1 und einem Kapselboden 2.2 sowie einen Deckel 3 aufweist. Die Wandung und der Kapselboden definieren einen Hohlraum 4, in den ein Getränkesubstrat und ggf. ein Einbauelement vorgesehen ist. Dieser Hohlraum wird nach dessen Befüllung von dem Deckel verschlossen, der vorzugsweise mit dem Randbereich 2.3 des Kapselkörpers beispielsweise durch Siegeln oder Kleben verbunden wird. Diese Kaffeekapsel wird in eine Brühkammer 8 eingeführt, in der sie von einer Flüssigkeit, beispielsweise Wasser, durchströmt wird. Dabei wird das Getränkesubstrat extrahiert oder aufgelöst und dadurch das gewünschte Getränk erzeugt. Erfindungsgemäß weist diese Portionskapsel nun eine Kennung 5 auf, mit der feststellbar ist, ob die jeweilige Portionskapsel für die Herstellung eines Getränk oder Lebensmittels geeignet ist. Ist dies nicht der Fall, können sich signifikante Gesundheitsprobleme ergeben. Beispielsweise kann durch den Einsatz einer Reinigungskapsel ein für den Benutzer ungenießbare wässrige Lösung hergestellt werden. Die gilt es zu vermeiden. Erfindungsgemäß ist diese Kennung in einer ein- oder mehrschichtigen Kunststofffolie 6 vorgesehen, aus der die Portionskapsel zumindest teilweise gefertigt ist. Im vorliegenden Fall ist der Kapselkörper aus der Kunststofffolie gefertigt, wobei die Kunststofffolie dreischichtig ist. Die im Kapselkörper nach außen gewandte Oberflächenschicht 7 der Kunststofffolie ist im vorliegenden Fall aus einem Polyamid und einem Polyester aufgebaut, welche in einem vorgegebenen Mischungsverhältnis vorliegen. Der Oberflächenwiderstand der Oberflächenschicht 7 fungiert als Kennung. Dieser kann über zwei Kontaktpunkte 9 mit einem am Getränkeautomaten vorhandenen Ohmmeter gemessen werden. Entspricht der gemessene Wert nicht dem Referenzwert, so wird eine Inbetriebnahme des Getränkeautomaten blockiert. Dabei kann zusätzlich ein optischer und/oder akustischer Warnhinweis abgesetzt werden. Dadurch kann verhindert werden, dass eine Portionskapsel, die nicht für den Getränkeautomaten geeignet ist in den jeweiligen Getränkeautomat eingesetzt und dort mit einer zu hohen Temperatur oder einem zu hohen Druck beaufschlagt wird. Die Kennung beruht in diesem Fall allein auf den Materialeigenschaften der Folie, insbesondere auf der Art des verwendeten Polyamids und Polyesters, deren Mischungsverhältnis und der Dicke der Oberflächenschicht 7.

**Figur 2** zeigt eine weitere Ausführungsform der erfindungsgemäßen Portionskapsel. In dem vorliegenden Fall ist der Deckel aus der Kunststofffolie gefertigt, wobei die Kunststofffolie in diesem Fall fünfschichtig ist. Im vorliegenden Fall weist die Oberflächenschicht der Kunststofffolie ein Antistatikum auf. Der Oberflächenwiderstand der Oberflächenschicht 7 fungiert als Kennung. Dieser kann über zwei Kontaktpunkte 9 mit einem am Getränkeautomaten vorhandenen Ohmmeter gemessen werden. Entspricht der gemessene Wert nicht dem Referenzwert, so wird eine Inbetriebnahme des Getränkeautomaten blockiert. Durch die Wahl des Antistatikums, dessen Menge sowie durch die Wahl der Kunststoff-Komponenten und der Schichtdicke der Oberflächenschicht kann der Oberflächenwiderstand vorgegeben werden.

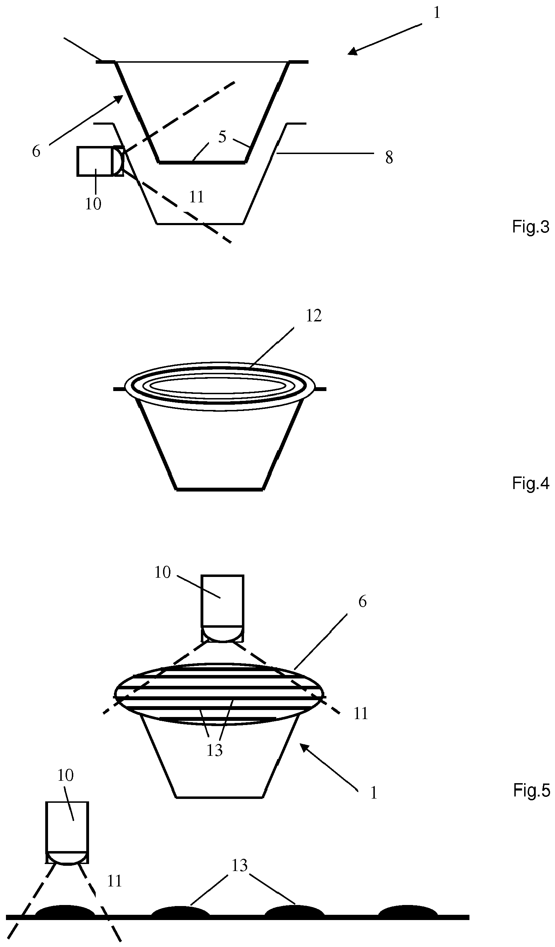

**Figur 3** zeigt eine weitere Ausführungsform der erfindungsgemäßen Portionskapsel. In dem vorliegenden Fall ist der Kapselkörper aus der Kunststofffolie gefertigt, wobei in der Oberflächenschicht der Kunststofffolie eine lumineszenzfähige und/oder phosphoreszenzfähige Verbindung dispergiert vorliegt. Die lumineszenzfähige und/oder phosphoreszenzfähige Verbindung kann mit einem Detektionsmittel bzw. Sensor 10 durch die Bestimmung der Wellenlänge ihrer nach Anregung durch Energiezufuhr emittierten Strahlung erkannt werden. Das Detektionsmittel umfasst einen Sender zur Aussendung von beispielsweise UV-Strahlung, durch welche die lumineszenzfähige und/oder phosphoreszenzfähige Verbindung angeregt wird. Ferner weist das Detektionsmittel eine Vorrichtung für den Empfang und die Auswertung der von der lumineszenzfähige und/oder phosphoreszenzfähige Verbindung emittierten Strahlung auf. Entspricht der gemessene Wert nicht dem Referenzwert, so wird eine Inbetriebnahme des Getränkeautomaten blockiert.

**Figur 4** zeigt eine weitere Ausführungsform der erfindungsgemäßen Portionskapsel. Im vorliegenden Fall ist der Deckel aus einer Kunststofffolie gefertigt, wobei in der Oberflächenschicht der Kunststofffolie ein Laserlicht-absorbierendes Additiv dispergiert ist und welche einen durch die Einwirkung von Laserlicht erzeugten Barcode 12 aufweist. Der Barcode 12 kann mit Hilfe eines Detektionsmittel bzw. Sensors gelesen werden.

**Figur 5** zeigt eine weitere Ausführungsform der erfindungsgemäßen Portionskapsel. Im vorliegenden Fall ist der Deckel aus einer Kunststofffolie gefertigt, welche eine maschinell erkennbare Oberflächenstruktur 13 als Kennung aufweist. Die Kennung kann mit Hilfe eines Detektionsmittel bzw. Sensors gelesen werden.

### Bezugszeichenliste

- 1: Portionskapsel
- 2: Kapselkörper
- 2.1: Wandung
- 2.2: Kapselboden
- 2.3: Randbereich, Flansch
- 3: Deckel, Deckelfolie
- 4: Hohlraum
- 5: Kennung
- 6: Kunststofffolie
- 7: Oberflächenschicht
- 8: Brühkammer
- 9: Kontaktpunkte
- 10: Detektionsmittel/Sensor
- 11: Strahl
- 12: Barcode
- 13: Oberflächenstruktur/Kennungsstreifen

## Patentansprüche

1. Portionskapsel (1) zur Herstellung eines Getränks aufweisend einen Kapselkörper (2) mit einem Kapselboden (2.1) und einen Deckel (3), wobei zwischen dem Kapselboden (2.1) und dem Deckel (3) ein Hohlraum (4) ausgebildet ist, in dem ein Getränkesubstrat vorgesehen ist, und die eine maschinelle erfassbare Kennung (5) aufweist, die es ermöglicht die jeweilige Portionskapsel zu individualisieren, **dadurch gekennzeichnet, dass**
- die Kennung in einer ein- oder mehrschichtigen Kunststofffolie (6) vorgesehen ist, aus der die Portionskapsel zumindest teilweise gefertigt ist,
- die Kunststofffolie (6) eine maschinell erkennbare Oberflächenstruktur (13) aufweist und
- die Kennung (5) optisch erfassbar ist.

2. Portionskapsel (1) nach Anspruch 1, **dadurch gekennzeichnet, dass** der Kapselkörper (2) zumindest teilweise aus der Kunststofffolie (6) gefertigt ist.

3. Portionskapsel (1) nach Anspruch 1 oder 2, **dadurch gekennzeichnet, dass** der Deckel (3) zumindest teilweise aus der Kunststofffolie (6) gefertigt ist.

4. Portionskapsel (1) nach einem der Ansprüche 1 - 3, **dadurch gekennzeichnet, dass** die optisch erfassbare Kennung in Form eines Barcodes (12), Logos oder Rapports vorliegt.

5. Verwendung einer Portionskapsel (1) nach einem der Ansprüche 1 bis 4 zur Herstellung eines Getränks, vorzugsweise zur Herstellung eines Kaffee-, Kakao-, Tee und/oder Milchgetränks.
